(19) Europäisches Patentamt
European Patent Office
Office européen des brevets

(11) Veröffentlichungsnummer: **0 037 904**
**B1**

(12) # EUROPÄISCHE PATENTSCHRIFT

(45) Veröffentlichungstag der Patentschrift: **28.12.83**

(21) Anmeldenummer: **81101778.9**

(22) Anmeldetag: **11.03.81**

(51) Int. Cl.³: **C 09 B 45/16,** C 09 B 55/00 //D06P 1/10

(54) **Metallkomplexfarbstoffe.**

(30) Priorität: **21.03.80 DE 3010872**

(43) Veröffentlichungstag der Anmeldung:
**21.10.81 Patentblatt 81/42**

(45) Bekanntmachung des Hinweises auf die Patenterteilung:
**28.12.83 Patentblatt 83/52**

(84) Benannte Vertragsstaaten:
**CH DE FR GB IT LI**

(56) Entgegenhaltungen:
**FR - A - 1 116 491**
**FR - A - 1 414 067**
**FR - A - 2 368 519**

(73) Patentinhaber: **BASF Aktiengesellschaft**
**Carl-Bosch-Strasse 38**
**D-6700 Ludwigshafen (DE)**

(72) Erfinder: **Baumann, Hans, Dr.**
**Roemerweg 31**
**D-6706 Wachenheim (DE)**
Erfinder: **Grychtol, Klaus, Dr.**
**Seebacher Strasse 96A**
**D-6702 Bad Duerkheim (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 037 904 B1

Metallkomplexfarbstoffe

Die Erfindung betrifft Verbindungen, die in Form der freien Säuren der allgemeinen Formel I

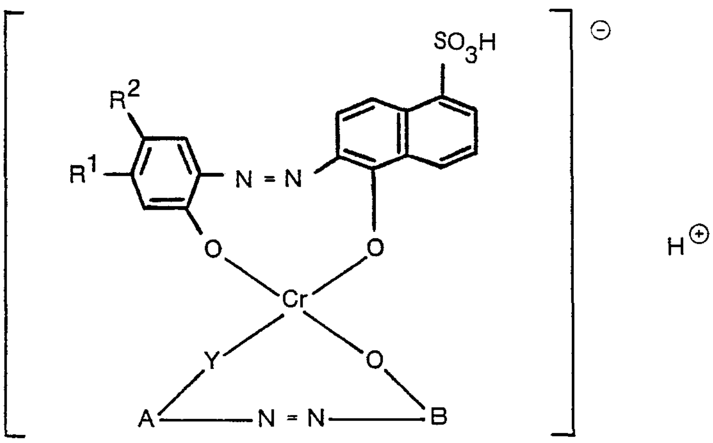

entsprechen, in der

A der Rest einer Diazokomponente der Benzol- oder Naphthalinreihe,
B der Rest einer Kupplungskomponente der Benzol-, Naphthalin- oder Pyrazolonreihe,
$R^1$ Chlor oder Brom,
$R^2$ Methoxy oder Äthoxy und
Y —O— oder —COO— sind.

Die Reste der Diazokomponenten A können die bie Metallkomplexfarbstoffen üblichen Substituenten, wie Chlor, Brom, Methyl, Äthyl, $C_1$- bis $C_4$-Alkoxy, Trifluoromethyl, Nitro, $C_1$- bis $C_4$-Alkylsulfonyl, Phenylsulfonyl, gegebenenfalls substituiertes Carbamoyl oder Sulfamoyl oder Hydroxysulfonyl tragen.

Einige wichtige Diazokomponenten

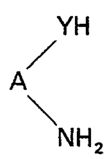

sind beispielsweise:

2-Aminophenol, 4-Chlor-2-Aminophenol, 4- oder 5-Nitro-2-aminophenol, 4,6-Dichlor-2-aminophenol, 4-Methyl-6-nitro-2-aminophenol, 4-Chlor-5-nitro-2-aminophenol, 2-Aminobenzoesäure, 4-Nitro-2-aminobenzoesäure, 2-Aminobenzoesäure-5-sulfonsäure, 2-Aminophenol-4-sulfonsäure, 2-Aminophenol-4-sulfonsäureamid, 2-Aminophenol-4-sulfonsäurephenylamid, 2-Aminophenol-5-sulfonsäuredimethylamid, 2-Aminophenol-4-sulfonsäure-$\gamma$-methoxypropylamid, 4-Chlor-2-aminophenol-6-sulfonsäure, 4-Nitro-2-aminophenol-6-sulfonsäure, 5-oder 6-Nitro-2-aminophenol-4-sulfonsäure, 1-Amino-2-naphthol-4-sulfonsäure, 2-Amino-1-naphthol-5-sulfonsäure, 1-Amino-6-nitro-2-naphthol-4-sulfonsäure und 3,5-Dichlor-2-aminophenol.

Kupplungskomponenten sind beispielsweise:

4-Methylphenol, 3,4-Dimethylphenol, 4-Acetylaminophenol, 4-Methyl-3-acetylaminophenol, 4-Methoxyphenol, 3-Diäthylaminophenol, 4-Methyl-3-äthylaminophenol, 3-(o-Tolylamino)-phenol, 2-Naphthylamin, 2-Naphthol, 6-Brom-2-naphthol, 8-Acetylamino-2-naphthol, 5,8-Dichlor-1-naphthol, 1-Naphthol-5-sulfonsäure, 2-Naphthol-6-sulfonsäure, 1-Naphthylamin-4- oder -5-sulfonsäure, 2-Naphthylamin-5- oder -6-sulfonsäure, 8-Acetylamino-1-naphthol-5-sulfonsäure, 6-Phenylamino-1-naphthol-3-sulfonsäure, 7-Amino-1-naphthol-3-sulfonsäure, 3-Methyl-5-pyrazolon, 1-Phenyl-3-methyl-5-pyrazolon, 1,3-Diphenyl-5-pyrazolon, 1-Phenyl-5-pyrazolon-3-carbonsäure, 1-(2'-Methylphenyl)-3-methyl-5-pyrazolon, 1-(4'-Chlorphenyl)-3-methyl-5-pyrazolon, 1-(2',5'-Dichlorphenyl)-3-methyl-5-pyrazolon, 1-Phenyl-3-methyl-5-pyrazolon-4'-carbonsäure, 1-Phenyl-3-methyl-5-pyrazolon-3'- oder -4'-sulfonsäure, 1,3-Diphenyl-5-pyrazolon-2'-sulfonsäure, 1-(2'-Chlorphenyl)-3-methyl-5-pyrazolon-5'-sulfonsäure oder 1-(2',5'-Dichlorphenyl)-3-methyl-5-pyrazolon-4'-sulfonsäure.

Zur Herstellung der Verbindungen der Formel I kann man an Cr-Komplexe der Formel

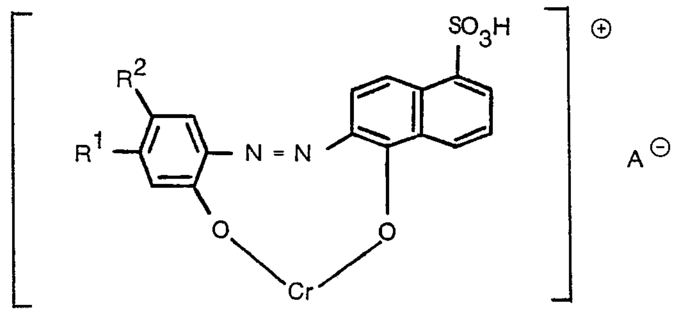

in der $A^{\ominus}$ ein Anion ist, Verbindungen der Formel

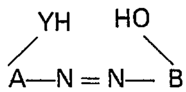

nach an sich bekannten Methoden anlagern.

Einzelheiten der Herstellung können den Beispielen entnommen werden, in denen sich Angaben über Teile und Prozente, sofern nicht anders vermerkt, auf das Gewicht beziehen.

Die Verbindungen der Formel I eignen sich insbesondere zum Färben von natürlichen und synthetischen Polyamiden, wie Wolle, Seide, Leder oder Nylon. Man erhält dunkle Farbtöne mit sehr guten Echtheiten, von denen die Naßechtheiten hervorzuheben sind.

Von besonderer Bedeutung sind Verbindungen der allgemeinen Formel I a

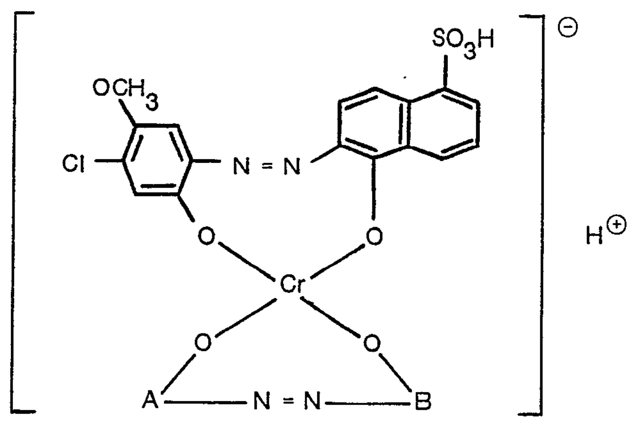

in der A und B die angegebene Bedeutung haben.

Besonders wertvolle Diazokomponenten sind z.B.:

2-Aminophenol-4-sulfonsäure, 4-Chlor-2-Aminophenol-6-sulfonsäure, 4-Nitro-2-aminophenol-6-sulfonsäure, 5-oder 6-Nitro-2-aminophenol-4-sulfonsäure, 6-Nitro-2-aminophenol-4-sulfonsäure, 4-oder 5-Nitro-2-aminophenol, 1-Amino-2-naphthol-4-sulfonsäure und 1-Amino-2-naphthol-6-nitro-4-sulfonsäure.

Besonders wertvolle Kupplungskomponenten sind beispielsweise:

$\beta$-Naphthol, 1-Phenyl-3-methyl-pyrazolon-5 und 1-Amino-8-hydroxy-naphthalin-3,6-disulfonsäure.

Gegenüber nächstvergleichbaren aus der FR—A—2 368 519 bekannten Farbstoffen weisen erfindungsgemäße Verbindungen Vorteile in Naßechtheiten auf.

Beispiel 1

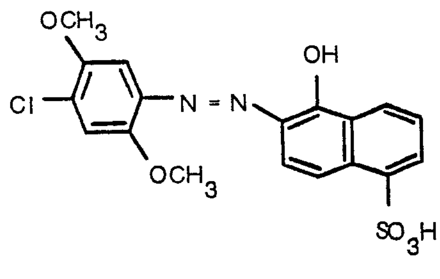

1:1-Cr-Komplex durch entmethylierende Chromierung

376 Teile 2-Chlor-5-aminohydrochinondimethyläther werden in 2800 Teilen Eiswasser mit 400 Volumenteilen halbkonzenttrierter Salzsäure versetzt. Man diazotiert durch Zugabe von 620 Volumenteilen 23%iger Natriumtritlösung bei 0—5°C. Überschüssiges Nitrit wird mit Amidosulfonsäure zerstört. Die filtrierte Diazolösung läuft in eine Lösung aus 450 Teilen 1-Hydroxynaphthalin-5-sulfonsäure in 3200 ml Eiswasser, 70 Teilen Natronlauge und 100 Teilen Soda. Die Kupplung ist nach zwei Stunden beendet*.) Nun fügt man eine Lösung aus 300 g Chrom-(III)-oxid in 300 g Ameisensäure und zwei Litern Waser zu und heizt im Autoklaven drei Stunden auf 130°C. Nach dem Abkühlen wird abgesaugt und getrocknet. Man erhält ein schwarzes Pulver. Ausbeute: 750 Teile. Wolle und Leder werden graublau gefärbt.

Beispiel 2

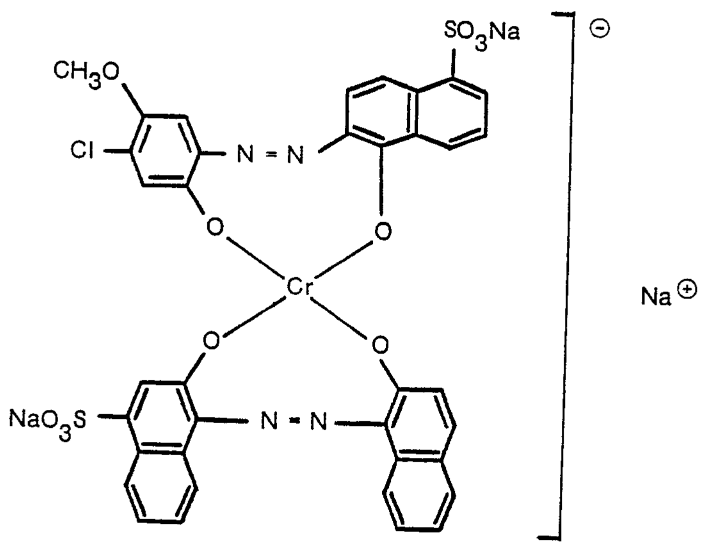

40 Teile des Azofarbstoffs aus 1-Amino-2-naphthol-4-sulfonsäure und β-Naphthol und 40 Teile des nach Beispiel 1 hergestellten 1:1-Chromkomplexes werden in 500 Teilen Wasser auf 80°C erwärmt und mit Natronlauge bei pH = 7,5 gerührt. Dauer fünf Stunden. Man kühlt ab und salzt mit Natriumchlorid aus. Nach dem Trocknen erhält man ein schwarzes Pulver, das Wolle und Leder in rotstichig blauen Tönen färbt. Die Echtheiten der erhaltenen Färbungen sind gut.

In der folgenden Tabelle sind weitere Farbstoffe aufgeführt, die an den 1:1-Komplex gemäß Beispiel 1 angelagert, Farbstoffe mit ähnlich guten Eigenschaften ergeben.

*) Anschließend stellt man mit Salzsäure einen pH von1 ein.

| Bsp. | Azo- bzw. Azomethinfarbstoff | Farbton auf Wolle |
|---|---|---|
| 3 | 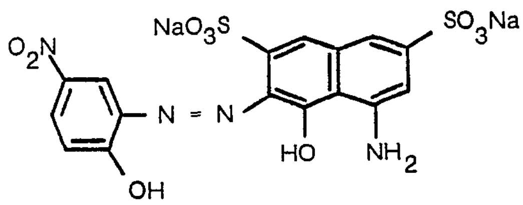 | dunkelblau |
| 4 | 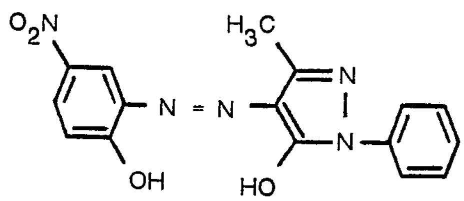 | braun |
| 5 | 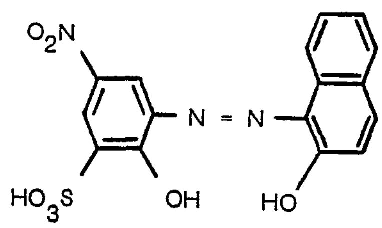 | braun |
| 6 | 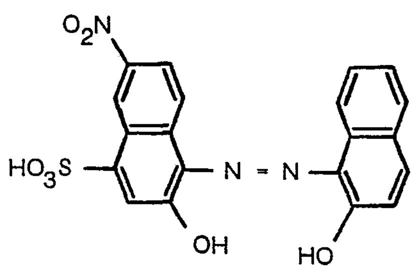 | blau |
| 7 | 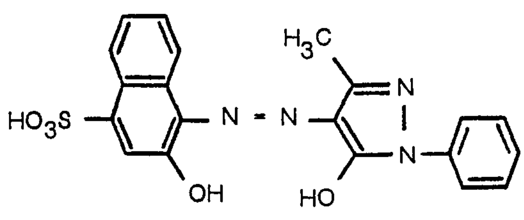 | violett |
| 8 | 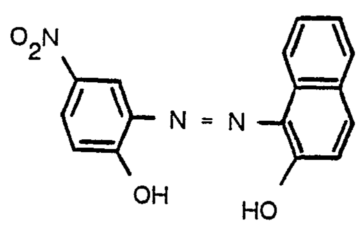 | braun |

| Bsp. | Azo- bzw. Azomethinfarbstoff | Farbton auf Wolle |
|---|---|---|
| 9 | 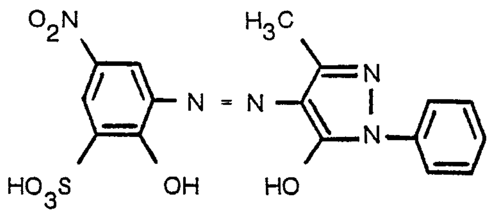 | braun |
| 10 | 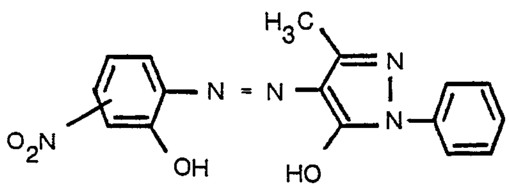 | rotbraun |
| 11 | 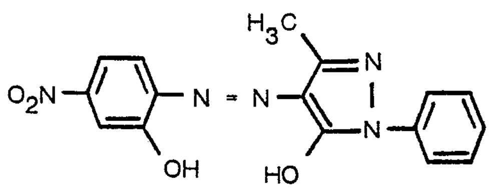 | rotbraun |
| 12 | 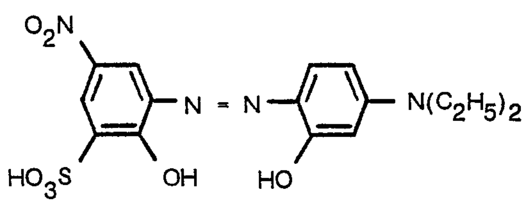 | violett |
| 13 | 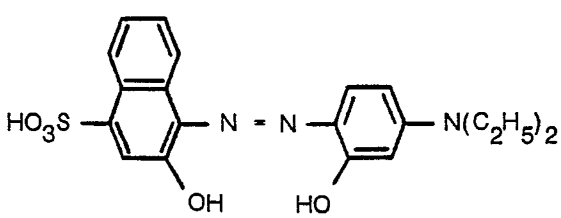 | blau |
| 14 | 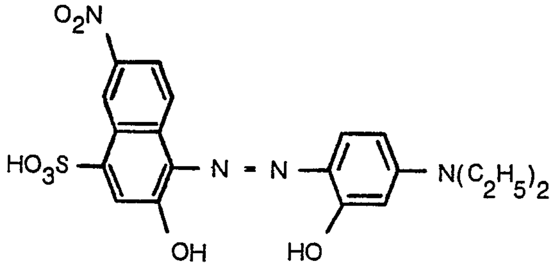 | dunkelblau |

| Bsp. | Azo- bzw. Azomethinfarbstoff | Farbton auf Wolle |
|---|---|---|
| 15 | 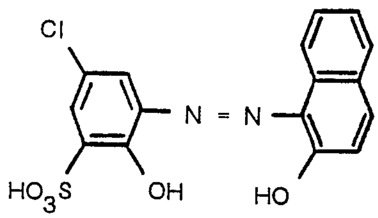 | violett |
| 16 | 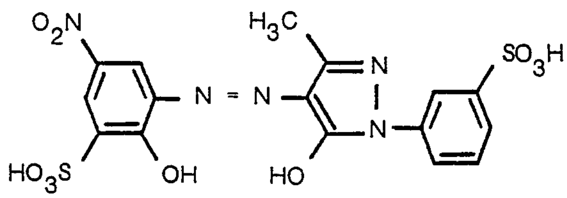 | braun |
| 17 | 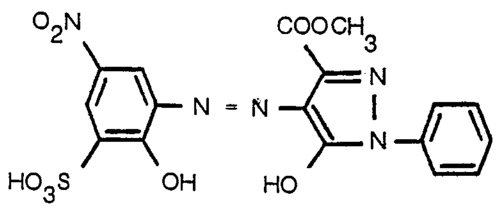 | braun |
| 18 | 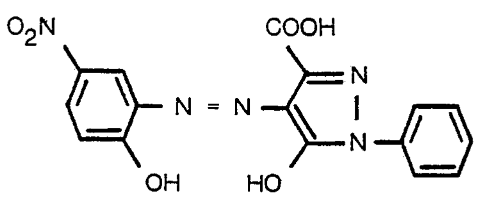 | braun |
| 19 | 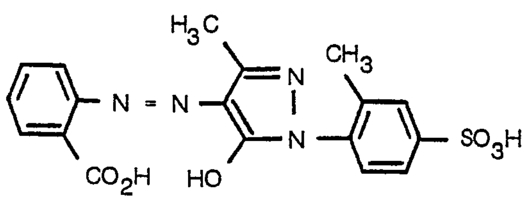 | grün |
| 20 | 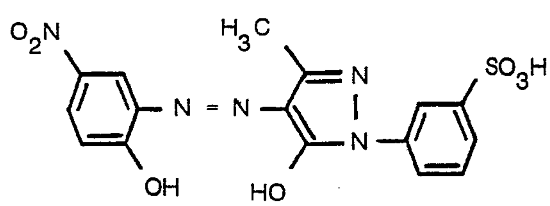 | braun |

| Bsp. | Azo- bzw. Azomethinfarbstoff | Farbton auf Wolle |
|---|---|---|
| 21 | 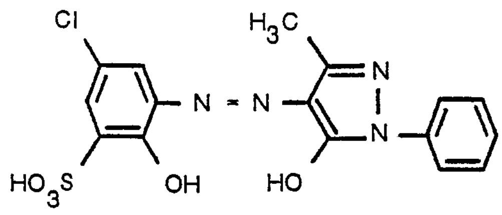 | rotbraun |
| 22 | 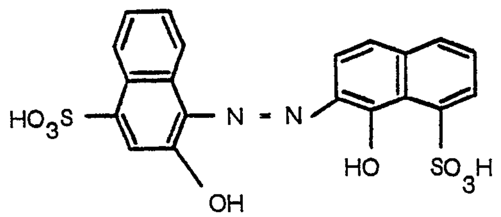 | blau |

## Patentansprüche

1. Metallkomplexfarbstoffe, die in Form der freien Säuren der allgemeinen Formel I

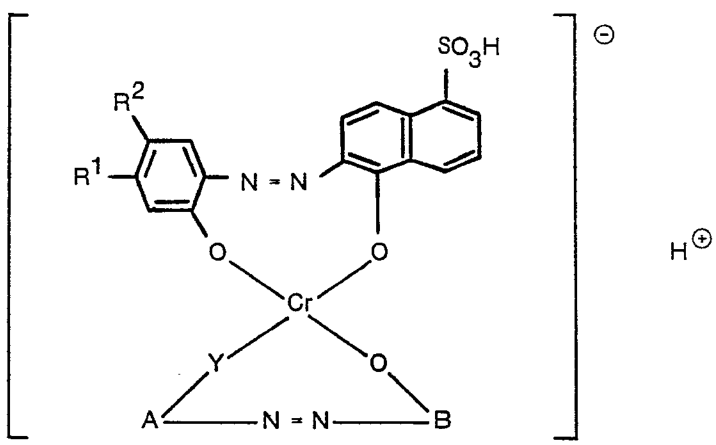

entsprechen, in der

A der Rest einer Diazokomponente der Benzol- oder Naphthalinreihe,
B der Rest einer Kupplungskomponente der Benzol-, Naphthalin- oder Pyrazolonreihe,
$R^1$ Chlor oder Brom,
$R^2$ Methoxy oder Äthoxy und
Y —O— oder —COO— sind.

2. Verbindungen gemäß Anspruch 1 der allgemeinen Formel

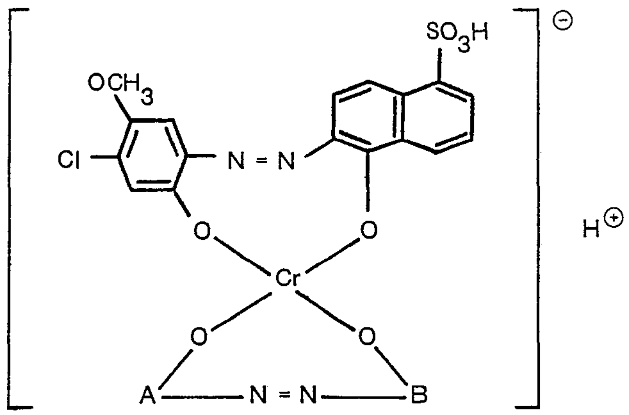

in der A und B die für Anspruch 1 angegebene Bedeutung haben.

3. Verwendung der Verbindungen gemäß Anspruch 1 oder 2 zum Färben von natürlichen oder synthetischen Polyamiden.

## Claims

1. A metal complex dye which in the form of the free acid corresponds to the general formula I

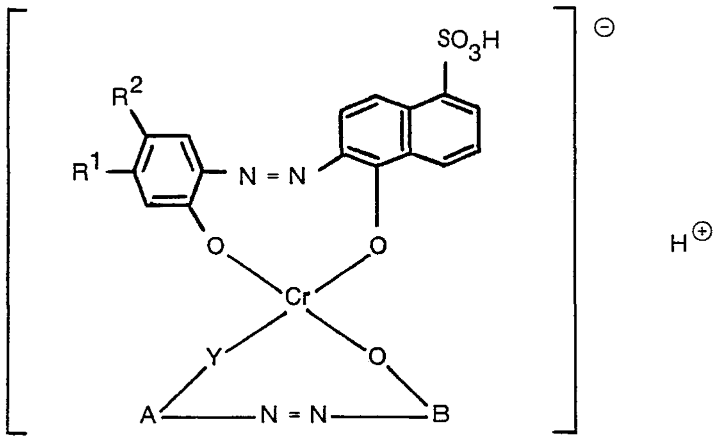

where

A is a radical of a diazo component of the benzene or naphthalene series,
B is a radical of a coupling component of the benzene, naphthalene or pyrazolone series,
$R^1$ is chlorine or bromine,
$R^2$ is methoxy or ethoxy, and
Y is —O— or —COO—.

2. A compound as claimed in claim 1, of the general formula

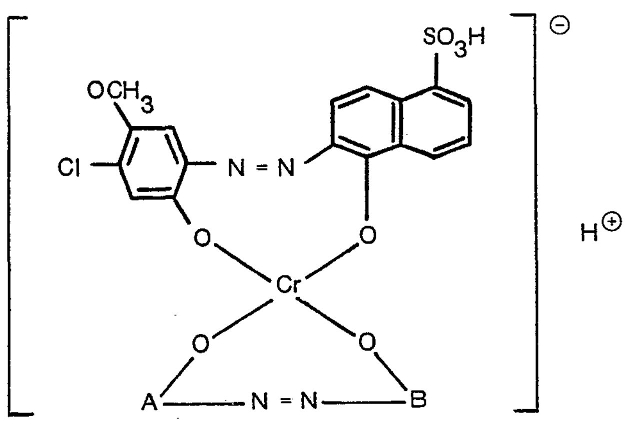

where A and B have the meanings given in claim 1.

3. The use of a compound as claimed in claim 1 or 2 for dyeing natural and synthetic polyamides.

**Revendications**

1. Complexes métalliques colorants qui, sous la forme des acides libres, répondent à la formule générale I

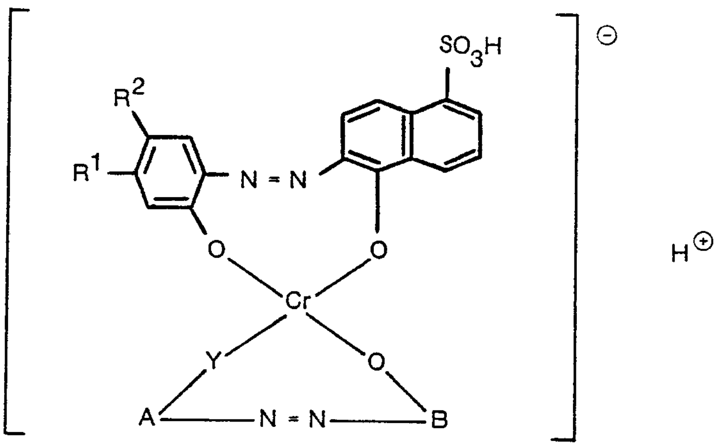

dans laquelle

A est le radical d'un constituant diazoïque de la série benzénique ou naphtalénique,

B est le radical d'un constituant de copulation de la série benzénique, naphtalénique ou pyrazolonique,

$R^1$ est un atome de chlore ou de brome,

$R^2$ est un groupe méthoxy ou éthoxy et

Y est mis pour —O— ou —COO—.

2. Composés selon la revendication 1, de formule générale:

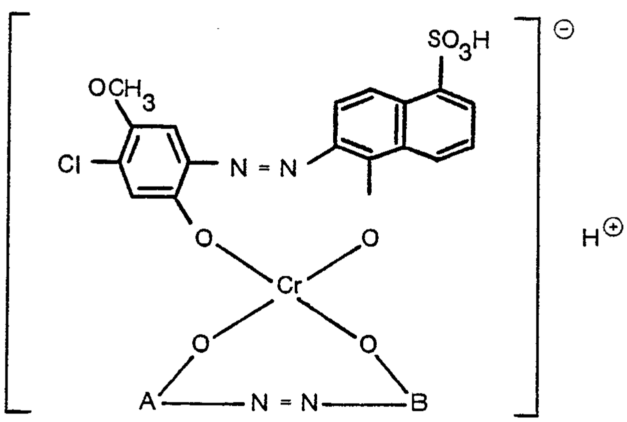

dans laquelle A et B ont les significations données à propos de la revendication 1.

3. Utilisation des composés selon la revendication 1 ou 2 pour la teinture de polyamide naturels ou synthétiques.